# EUROPEAN PATENT SPECIFICATION

(11) **EP 2 558 896 B1**
(45) Date of publication and mention of the grant of the patent: **24.04.2019**
(21) Application number: 11713154.0
(22) Date of filing: 30.03.2011
(51) Int. Cl.: G02B 6/44, H02G 3/08, H04Q 1/14

(54) **SYSTEM COMPRISING A PLURALITY OF DISTRIBUTION DEVICES**
MEHRFACH-VERTEILANORDNUNGEN AUFWEISENDER AUFBAU
SYSTEME COMPRENANT PLUSIEURS DISPOSITIFS DE DISTRIBUTION

(30) Priority: 28.10.2010 US 407713 P; 16.04.2010 US 325082 P
(43) Date of publication of application: 20.02.2013
(73) Proprietor: Corning Optical Communications LLC, Hickory, NC 28601-3336 (US)
(72) Inventor: FABRYKOWSKI, Grzegorz, PL-95-010 Strykow (PL); MÜLLER, Michael, 58706 Menden (DE)
(74) Representative: Sturm, Christoph
(86) International application number: PCT/US2011/030448
(87) International publication number: WO 2011/130000

(56) References cited:
- WO-A1-97/22025
- WO-A2-2007/089682
- FR-A5- 2 123 728
- US-A- 6 118 075
- US-A1- 2009 324 189

## Description

### BACKGROUND

The present invention relates to a system comprising a plurality of distribution devices such as optical waveguide distribution devices, in particular comprising a plurality of wall-mounted distribution boards, for handling data conductors such as optical waveguides or junctions between data conductors, in accordance with the precharacterizing clause of Claim 1.

When constructing optical waveguide cable networks, for example, optical waveguide distribution devices are required in order to ensure structured wiring. One demand placed on such optical waveguide distribution devices is a maximum possible number of optical waveguide distribution devices fitted with a high packing density and, at the same time, a low level of mechanical stress on the optical waveguides. Similar demands are placed on distribution devices for handling other data conductors.

DE 20 2007 000 556 U1 has disclosed an optical waveguide distribution device in the form of a wall-mounted distribution board and having a housing and assemblies arranged in the housing for handling optical waveguides. The housing of the optical waveguide distribution device known from this prior art has a modular design and has a plurality of basic modules which can be connected to one another and which can be connected in a defined grid pattern in the horizontal direction and/or vertical direction in order to extend the dimensions of the housing of the optical waveguide distribution device. In this case, however, directly adjacent basic modules of the optical waveguide distribution device do not adjoin one another with the side walls thereof.

EP 2 060 942 A1 has likewise disclosed an optical waveguide distribution device with a housing and assemblies accommodated in the housing for handling, namely connecting and/or storing, optical waveguides. In accordance with this prior art, a plurality of optical waveguide distribution devices can be connected to one another in order to form a system comprising a plurality of optical waveguide distribution devices.

WO 97/22025 A1 discloses a system according to the preamble of claim 1.

If the intention is for a plurality of distribution devices to be connected to one another to form a system of distribution devices, the correct alignment of the distribution devices to be connected to one another presents difficulties. This is a disadvantage.

### SUMMARY

Against this background, the invention is based on the problem of providing a novel system comprising a plurality of distribution devices. This problem is solved by a system comprising a plurality of distribution devices having the features of Claim 1.

The present invention firstly proposes associating alignment and connection means with at least two mutually opposite side walls of the housing of each distribution device in a system comprising a plurality of distribution devices in order to align in each case directly adjacent distribution devices with one another in the horizontal direction and/or in the vertical direction via the alignment and connection means associated with the directly adjoining side walls of the distribution devices.

It is thus possible for a precise clearance to be adhered to both in the horizontal direction and in the vertical direction when a plurality of distribution devices are combined or arranged to form a system comprising a plurality of distribution devices.

Preferably, in each case directly adjacent distribution devices can be aligned with respect to one another in the horizontal direction and in the vertical direction via the alignment and connection means associated with the directly adjoining side walls of said distribution devices.

In accordance with an advantageous development of the invention, the alignment and connection means of directly adjoining side walls of directly adjacent distribution devices engage in one another in a form-fitting manner and are contoured in such a way that they can be brought out of engagement and into engagement exclusively in a direction which runs perpendicular to the rear walls of the housing lower parts.

The above contouring of the alignment and connection means in such a way as to enable said alignment and connection means to be brought out of engagement and into engagement exclusively in the direction running perpendicular to the rear walls is particularly preferred. Thus, such a contouring of the alignment and connection means firstly enables a successive design of a system comprising a plurality of distribution devices by virtue of individual distribution devices being added successively.

Secondly, this contouring of the alignment and connection means enables individual distribution devices from an already constructed system comprising a plurality of distribution devices to be replaced individually. In this case, no access needs to be made to the other distribution devices in this system.

Preferably, cutouts are formed, as alignment and connection means, on at least one first side wall of the housing of each distribution device and projections are formed, as alignment and connection means, on at least one second side wall of the housing of each distribution device, which second side wall runs parallel to the respective first side wall, which cutouts and projections engage in one another in a form-fitting manner when directly adjacent distribution devices directly adjoin one another with a first side wall and a second side wall. The configuration of the alignment and connection means as cutouts and projections is particularly simple in design terms and enables the system comprising a plurality of distribution devices to be constructed without the aid of tools. It is possible by virtue of such alignment and connection means to construct the system comprising a plurality of distribution devices in the form of a puzzle.

### BRIEF DESCRIPTION OF THE DRAWINGS

Preferred developments of the invention are given in the dependent claims and the description below. Exemplary embodiments of the invention will be explained in more detail with reference to the drawing, in which:
Fig. 1 shows a schematic illustration of a distribution device in accordance with a preferred exemplary embodiment of the invention;
Fig. 2 shows a schematic illustration of a system comprising a plurality of distribution devices shown in Fig. 1 in accordance with a first exemplary embodiment of the invention;
Fig. 3 shows a detailed view of a system comprising a plurality of distribution devices in the form of optical waveguide distribution devices;
Fig. 4 shows the detail IV in Fig. 3;
Fig. 5 shows a schematic illustration of a system comprising a plurality of distribution devices in accordance with a further exemplary embodiment of the invention; and
Fig. 6 shows a schematic illustration of a system comprising a plurality of distribution devices in accordance with a further exemplary embodiment of the invention.

### DETAILED DESCRIPTION

The invention relates to a system comprising a plurality of distribution devices, in particular comprising a plurality of distribution devices in the form of wall-mounted distribution boards. Furthermore, the invention relates to a distribution device as part of such a system. In the text which follows, the invention for the preferred application for optical waveguide distribution devices is described.

The basic design of optical waveguide distribution devices in the form of wall-mounted distribution boards is conventional to a person skilled in the relevant art. Thus, an optical waveguide distribution device has a housing, in which assemblies for handling, namely for connecting and/or storing, optical waveguides are accommodated. A housing of an optical waveguide distribution device has a housing lower part, or base, with a rear wall and side walls, wherein an interior defined by the housing lower part serves to accommodate the assemblies for connecting and/or storing optical waveguides and can be covered preferably by a cover-like housing upper part, or cover.

As regards the basic design of optical waveguide distribution devices in the form of wall-mounted distribution boards, reference is made to DE 20 2007 000 556 U1 and EP 2 060 942 A2, for example.

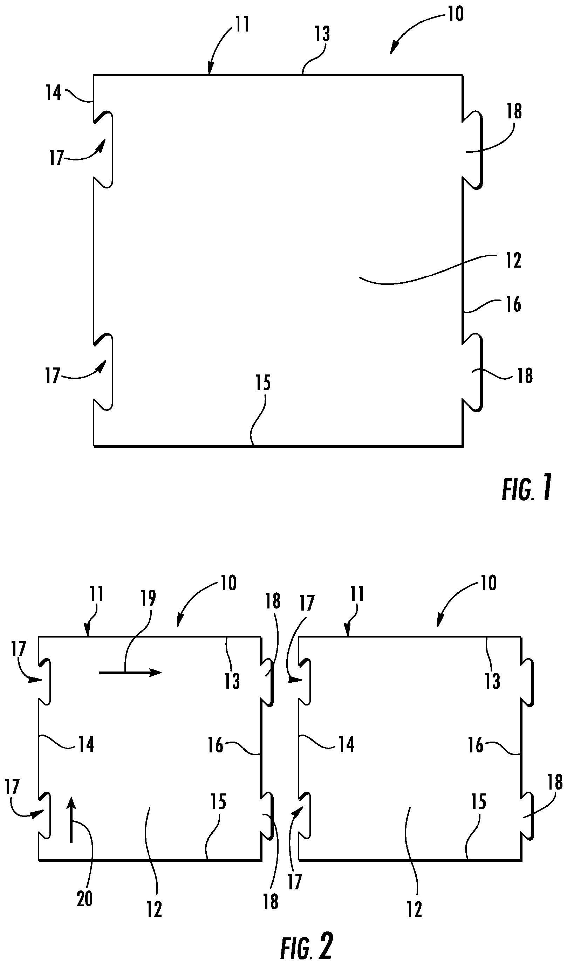

Fig. 2 shows a very schematized illustration of a system comprising two optical waveguide distribution devices 10, with one optical waveguide distribution device 10 being illustrated on its own in Fig. 1. Figs 1 and 2 show only the housing lower parts 11 of the optical waveguide distribution devices 10, said housing lower parts each having a rear wall 12 and side walls 13, 14, 15 and 16.

In order to precisely align the optical waveguide distribution devices 10 shown in Fig. 2 in the arrangement thereof so as to form the system comprising a plurality of optical waveguide distribution devices 10, in the exemplary embodiment shown in Fig. 1, alignment and connection means 17 and 18 are associated with the mutually opposite side walls 14 and 16 in order to align respectively directly adjacent optical waveguide distribution devices 12 with one another in the horizontal direction and/or in the vertical direction, preferably both in the horizontal direction and in the vertical direction, via the alignment and connection means 17 and 18 associated with the directly adjoining side walls 14 and 16 of said optical waveguide distribution devices and to connect them to one another. This horizontal direction and vertical direction in which the directly adjacent optical waveguide distribution devices 10 are aligned via their alignment and connection means 17, 18, run parallel to the rear walls 12 of the housing lower parts 11 of the optical waveguide distribution devices 10.

Thus, Fig. 2 shows the horizontal direction by virtue of an arrow 19 and the vertical direction by virtue of an arrow 20, with these two directions 19 and 20 running parallel to or in the plane of the rear walls 12 of the housing lower parts 11 of the optical waveguide distribution devices 10.

When two directly adjacent optical waveguide distribution devices 10 are aligned with one another in the region of the adjoining side walls 14 and 16 via the alignment and connection means 17 and 18, the alignment and connection means 17 and 18 ensure the alignment of the optical waveguide distribution devices 10 in the horizontal direction 19 and vertical direction 20, with the result that the optical waveguide distribution devices 10 are aligned with one another in a defined grid pattern and at a defined distance from one another in these directions 19 and 20 and are connected to one another.

In the exemplary embodiment shown in Figs 1 and 2, the alignment and connection means 17 and 18 are formed exclusively on two mutually opposite side walls 14 and 16, which run parallel to one another, of the housing lower parts 11 of the housings of the optical waveguide distribution devices 10. In this case, a plurality of optical waveguide distribution devices 10 can then be aligned with one another in one direction next to one another or in the form of a row.

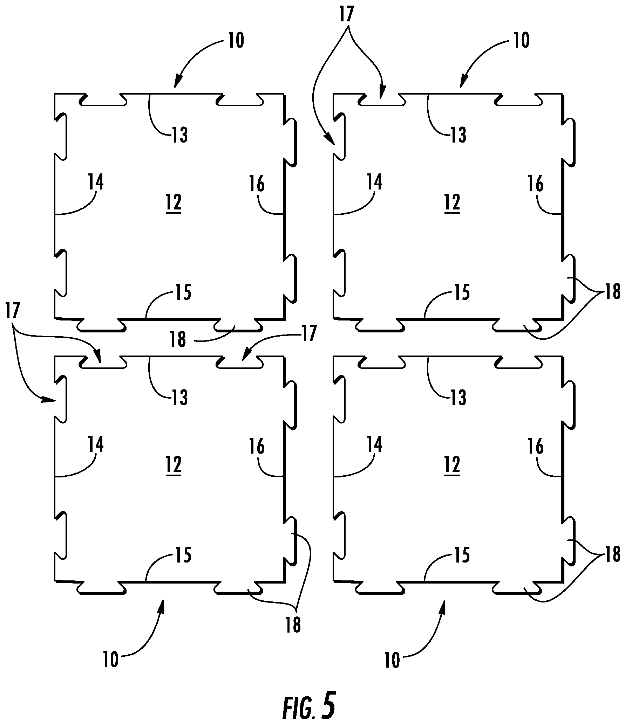

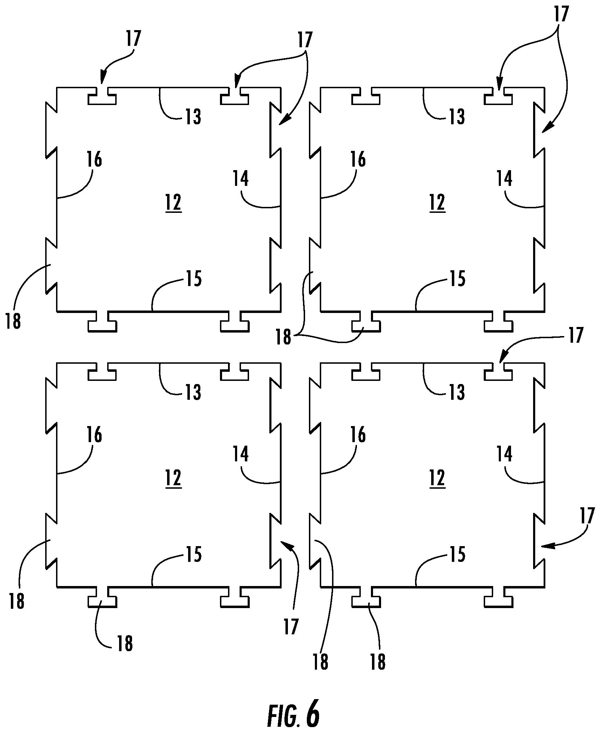

In contrast to this, Figs 5 and 6 show exemplary embodiments of the invention in which the alignment and connection means 17 and 18 are formed on all four side walls 13, 14, 15 and 16 of the housing lower parts 11 of the optical waveguide distribution devices 10, in which case a plurality of optical waveguide distribution devices 10 can be aligned with one another in the form of an array, namely next to one another and one above the other or in the form of rows and in the form of columns. In this case, a plurality of optical waveguide distribution devices 10 can then be aligned with one another so as to form a T-shaped or L-shaped or E-shaped pattern or so as to form another geometric, two-dimensional pattern.

The alignment and connection means 17 and 18 of directly adjoining optical waveguide distribution devices 10, which alignment and connection means 17 and 18 are associated with the side walls 14 and 16 or 13, 14, 15 and 16 of the optical waveguide distribution devices 10, engage in one another in a form-fitting manner in the fitted state.

In this case, the alignment and connection means of directly adjoining side walls 14 and 16 or 13 and 15 of directly adjacent optical waveguide distribution devices 10 are contoured in such a way that, when said alignment and connection means are in a state in which they engage one in the other, said alignment and connection means can be brought out of engagement exclusively in a direction which runs perpendicular to the rear walls 12 of the housing lower parts 11 and therefore in a direction which runs perpendicular to the horizontal direction 19 and vertical direction 20. Likewise, for fitting purposes, the alignment and connection means 17 and 18 can be brought into engagement exclusively in this direction running perpendicular to the rear walls 12. These directions which run perpendicular to the rear walls 12 of the housing lower parts 11 and in which the alignment and connection means 17 and 18 of directly adjacent optical waveguide distribution devices 10 can be brought out of and into engagement run perpendicular to the plane of the drawing in Figs 1 and 2, i.e. out of or into the planes of the drawing.

In the preferred exemplary embodiments of the invention shown, the alignment and connection means 17 and 18 are in the form of cutouts and projections. Thus, the alignment and connection means 17 associated with the side walls 13 and 14 are in the form of cutouts and the alignment and connection means 18 associated with the side walls 15 and 16 are in the form of projections. When directly adjacent optical waveguide distribution devices 10 adjoin one another with side walls 14 and 16 or 13 and 15, the projections 18 engage in the cutouts 17, namely in a form-fitting manner, wherein said projections and cutouts can be brought into and out of engagement exclusively perpendicular to the rear wall 12, as has already been mentioned. As a result, a puzzle-like construction of a plurality of optical waveguide distribution devices 10 to form a system according to the invention comprising a plurality of optical waveguide distribution devices is possible, and it is likewise possible with an already constructed system of a plurality of optical waveguide distribution devices for individual optical waveguide distribution devices 10 to be replaced without access to other optical waveguide distribution devices 10.

In exemplary embodiments shown in Figs 1, 2 and 5, the projections 18 and cutouts 17 each have a dovetailed contour. Reference is made to the fact that other contours of the projections 18 and cutouts 17 are also possible. For example, Fig. 6 shows firstly projections 18 and cutouts 17 with T-shaped contours and secondly projections 18 and cutouts 17 with trapezoidal contours.

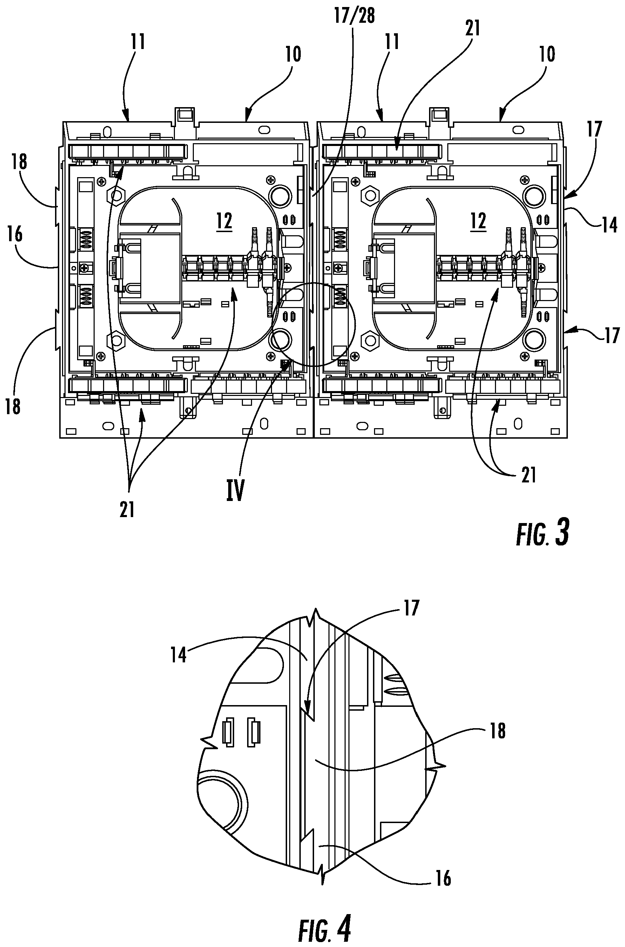

Figs 3 and 4 show a specific design embodiment of a system comprising two optical waveguide distribution devices 10 for the concept shown in figs 1 and 2, with fig. 3 also showing assemblies 21 for connecting and/or storing optical waveguides.

In accordance with a first advantageous development of the invention, a separate, cover-like housing upper part (not shown) is associated with each housing lower part 11 of each optical waveguide distribution device 10 of the system according to the invention comprising a plurality of optical waveguide distribution devices in order then to cover and to close all of the housing lower parts 11 individually.

In accordance with another advantageous development of the invention, it is possible to cover and to close all of the housing lower parts 11 via a common, cover-like housing upper part, in which case all of the housing lower parts 11 are accessible jointly.

Particularly preferred is a configuration of the invention in which a plurality of housing lower parts 11 can be closed and covered via a common, cover-like housing upper part, and in which at least one further housing lower part 11 can be covered and closed either via a separate or, together with at least one further other housing lower part, via a common, cover-like housing upper part.

In this case, different housing lower parts 11 are then combined to form different groups, in which case the different groups are closed via common, cover-like housing upper parts. This then makes it possible for particularly flexible and individually configurable access to be made to groups of housing lower parts 11.

The invention is not restricted to the preferred application of optical waveguide distribution devices. Instead, the invention can also be used for other distribution devices for handling other data conductors than optical waveguides, for example for handling copper conductors.

## Claims

1. A system of distribution devices (10) used for handling data conductors or junctions between data conductors, comprising:
first and second distribution devices (10), wherein the first and second distribution devices (10) are located adjacent to each other, and wherein each of the first and second distribution devices (10) comprises,
a housing having a housing lower part (11) with a rear wall (12) and side walls (13, 14, 15, 16), and
an alignment and connection feature (17, 18) on at least two mutually opposite side walls, wherein the alignment and connection feature (17, 18) of the first distribution device (10) engages with the alignment and connection feature (17, 18) of the second distribution device (10) to align and toollessly connect the first distribution device (10) and the second distribution device (10) together, **characterised in that** the first distribution device and the second distribution device are aligned and connected together in the horizontal direction and/or in the vertical direction, wherein the horizontal direction and the vertical direction in which the alignment and connection feature ensures the alignment of the first distribution device (10) and the second distribution device runs parallel to the rear walls (12) of the housing lower parts (11) of the first distribution device (10) and the second distribution device (10),
a common, cover-like housing upper part is associated with the housing lower parts (11) of the first distribution device (10) and the second distribution device (10) in order to close or cover jointly the respective housing lower parts (11), wherein all of the housing lower parts (11) are accessible jointly.

2. The system of claim 1, wherein the first distribution device (10) and the second distribution device (10) align with respect to one another in the horizontal direction and in the vertical direction via the alignment and connection feature (17, 18) associated with the directly adjoining side walls of the first distribution device (10) and the second distribution device (10).

3. The system according to claim 1, wherein the alignment and connection feature (17, 18) is formed on exclusively two mutually opposite side walls of the respective housing lower part (11).

4. The system of claim 1, wherein the alignment and connection feature (17, 18) is formed on four, in each case two mutually opposite, side walls of the respective housing lower part (11)

5. The system of claim 1, wherein the alignment and connection features (17, 18) of directly adjoining side walls of the first distribution device (10) and the second distribution device (10) engage in one another in a form-fitting manner.

6. The system of claim 1, wherein the alignment and connection features (17, 18) of directly adjoining side walls of the first distribution device (10) and the second distribution device (10) are contoured in such a way that they can be brought out of engagement and into engagement exclusively in a direction which runs perpendicular to the rear walls (17) of the housing lower parts (11) the first distribution device and the second distribution device.

7. The system of claim 1, wherein the alignment and connection feature (17, 18) comprises,
cutouts (17) formed on at least one first side wall of the housing lower part of each of the first distribution device and the second distribution device, and
projections (18) on at least one second side wall of the housing lower part of each the first distribution device and the second distribution device, and wherein the second side wall runs parallel to the respective first side wall.

8. The system of claim 7, wherein when the first distribution device (10) and the second distribution device (10) directly adjoin one another with a first side wall and a second side wall, the alignment and connection feature associated with the respective side walls engage in one another in a form-fitting manner.

9. The system of claim 7, wherein the alignment and connection feature (17, 18) on the housing lower part (11) of each of the first distribution device (10) and the second distribution device (10) comprises cutouts (17) on two first side walls, which run perpendicular to one another, and wherein the alignment and connection feature (17, 18) on the housing lower part (11) of each of the first distribution device and the second distribution device comprises projections (18) on two second side walls which run perpendicular to one another.

10. The system of claim 7, wherein the cutouts (17) and the projections (18) have at least one of a trapezoidal, T-shaped, and a dovetailed contour.

11. The system of claim 1, further comprising other distribution devices (10), wherein a common, cover-like housing upper part is associated with the housing lower parts (11) of the first distribution device (10) and the second distribution device (10) and the other distribution devices (10) in order to close or cover jointly all of the housing lower parts.

## Patentansprüche

1. System von Verteileinrichtungen (10), die zur Handhabung von Datenleitern oder Verbindungen zwischen Datenleitern verwendet werden, das Folgendes umfasst:
eine erste und eine zweite Verteileinrichtung (10), wobei die erste und die zweite Verteileinrichtung (10) einander benachbart angeordnet sind und sowohl die erste als auch die zweite Verteileinrichtung (10) Folgendes umfasst:
ein Gehäuse, das einen unteren Gehäuseteil (11) mit einer Rückwand (12) und Seitenwänden (13, 14, 15, 16) besitzt, und
einen Ausrichtungs- und Verbindungsbestandteil (17, 18) an zumindest zwei einander gegenüberliegenden Seitenwänden, wobei der Ausrichtungs- und Verbindungsbestandteil (17, 18) der ersten Verteileinrichtung (10) mit dem Ausrichtungs- und Verbindungsbestandteil (17, 18) der zweiten Verteileinrichtung (10) in Eingriff ist, um die erste Verteileinrichtung (10) und die zweite Verteileinrichtung (10) auszurichten und werkzeuglos zu verbinden, **dadurch gekennzeichnet, dass**
die erste Verteileinrichtung und die zweite Verteileinrichtung auf die Horizontalrichtung und/oder die Vertikalrichtung ausgerichtet und miteinander verbunden sind, wobei die Horizontalrichtung und die Vertikalrichtung, in denen der Ausrichtungs- und Verbindungsbestandteil die Ausrichtung der ersten Verteileinrichtung (10) und der zweiten Verteileinrichtung gewährleistet, parallel zu den Rückwänden (12) der unteren Gehäuseteile (11) der ersten Verteileinrichtung (10) und der zweiten Verteileinrichtung (10) verläuft, wobei
ein gemeinsamer abdeckungsartiger oberer Gehäuseteil den unteren Gehäuseteilen (11) der ersten Verteileinrichtung (10) und der zweiten Verteileinrichtung (10) zugeordnet ist, um die entsprechenden unteren Gehäuseteile (11) zu schließen oder gemeinsam abzudecken, wobei alle unteren Gehäuseteile (11) gemeinsam zugänglich sind.

2. System nach Anspruch 1, wobei die erste Verteileinrichtung (10) und die zweite Verteileinrichtung (10) mittels des Ausrichtungs- und Verbindungsbestandteil (17, 18), der den direkt angrenzenden Seitenwänden der ersten Verteileinrichtung (10) und der zweiten Verteileinrichtung (10) zugeordnet ist, in der Horizontalrichtung und der Vertikalrichtung in Bezug aufeinander ausgerichtet sind.

3. System nach Anspruch 1, wobei der Ausrichtungs- und Verbindungsbestandteil (17, 18) ausschließlich an zwei einander gegenüberliegenden Seitenwänden des entsprechenden unteren Gehäuseteils (11) gebildet ist.

4. System nach Anspruch 1, wobei der Ausrichtungs- und Verbindungsbestandteil (17, 18) an vier, in jedem Fall zwei gegenüberliegenden Seitenwänden des entsprechenden unteren Gehäuseteils (11) gebildet ist.

5. System nach Anspruch 1, wobei die Ausrichtungs- und Verbindungsbestandteile (17, 18) direkt angrenzender Seitenwände der ersten Verteileinrichtung (10) und der zweiten Verteileinrichtung (10) formschlüssig ineinander eingreifen.

6. System nach Anspruch 1, wobei die Ausrichtungs- und Verbindungsbestandteile (17, 18) direkt angrenzender Seitenwände der ersten Verteileinrichtung (10) und der zweiten Verteileinrichtung (10) derart geformt sind, dass sie ausschließlich in einer Richtung, die senkrecht zu den Rückwänden (17) der unteren Gehäuseteile (11) der ersten Verteileinrichtung und der zweiten Verteileinrichtung verläuft, außer Eingriff und in Eingriff gebracht werden können.

7. System nach Anspruch 1, wobei der Ausrichtungs- und Verbindungsbestandteil (17, 18) Folgendes umfasst:
Ausschnitte (17), die an zumindest einer ersten Seitenwand des unteren Gehäuseteils sowohl der ersten Verteileinrichtung als auch der zweiten Verteileinrichtung gebildet sind, und
Vorsprünge (18) an zumindest einer zweiten Seitenwand des unteren Gehäuseteils sowohl der ersten Verteileinrichtung als auch der zweiten Verteileinrichtung, wobei die zweite Seitenwand parallel zur entsprechenden ersten Seitenwand verläuft.

8. System nach Anspruch 7, wobei dann, wenn die erste Verteileinrichtung (10) und die zweite Verteileinrichtung (10) mit einer ersten Seitenwand und einer zweiten Seitenwand direkt aneinander angrenzen, die Ausrichtungs- und Verbindungsbestandteile, die den entsprechenden Seitenwänden zugeordnet sind, in einer formschlüssigen Weise ineinandergreifen.

9. System nach Anspruch 7, wobei der Ausrichtungs- und Verbindungsbestandteil (17, 18) am unteren Gehäuseteil (11) sowohl der ersten Verteileinrichtung (10) als auch der zweiten Verteileinrichtung (10) Ausschnitte (17) an zwei ersten Seitenwänden, die senkrecht zueinander verlaufen, umfasst und der Ausrichtungs- und Verbindungsbestandteil (17, 18) am unteren Gehäuseteil (11) sowohl der ersten Verteileinrichtung als auch der zweiten Verteileinrichtung Vorsprünge (18) an zwei zweiten Seitenwänden, die senkrecht zueinander verlaufen, umfasst.

10. System nach Anspruch 7, wobei die Ausschnitte (17) und die Vorsprünge (18) eine trapezförmige, eine T-förmige und/oder eine schwalbenschwanzförmige Kontur besitzen.

11. System nach Anspruch 1, das ferner weitere Verteileinrichtungen (10) umfasst, wobei ein gemeinsamer abdeckungsartiger oberer Gehäuseteil den unteren Gehäuseteilen (11) der ersten Verteileinrichtung (10), der zweiten Verteileinrichtung (10) und der weiteren Verteileinrichtungen (10) zugeordnet ist, um alle unteren Gehäuseteile zu schließen oder gemeinsam abzudecken.

## Revendications

1. Système de dispositifs (10) de distribution utilisés pour gérer des conducteurs de données ou des jonctions entre conducteurs de données, comportant :
des premier et deuxième dispositifs (10) de distribution, les premier et deuxième dispositifs (10) de distribution étant situés au voisinage l'un de l'autre, et chacun des premier et deuxième dispositifs (10) de distribution comportant
un boîtier comprenant une partie inférieure (11) de boîtier dotée d'une paroi arrière (12) et de parois latérales (13, 14, 15, 16), et
une entité (17, 18) d'alignement et de liaison sur au moins deux parois latérales mutuellement opposées, l'entité (17, 18) d'alignement et de liaison du premier dispositif (10) de distribution s'enclenchant avec l'entité (17, 18) d'alignement et de liaison du deuxième dispositif (10) de distribution pour aligner et relier ensemble sans outil le premier dispositif (10) de distribution et le deuxième dispositif (10) de distribution, **caractérisé en ce que**
le premier dispositif de distribution et le deuxième dispositif de distribution sont alignés et reliés ensemble dans la direction horizontale et/ou dans la direction verticale, la direction horizontale et la direction verticale dans lesquelles l'entité d'alignement et de liaison assure l'alignement du premier dispositif (10) de distribution et du deuxième dispositif de distribution s'étendant parallèlement aux parois arrière (12) des parties inférieures (11) de boîtier du premier dispositif (10) de distribution et du deuxième dispositif (10) de distribution,
une partie supérieure commune de boîtier, de type couvercle, étant associée aux parties inférieures (11) de boîtier du premier dispositif (10) de distribution et du deuxième dispositif (10) de distribution afin de fermer ou de recouvrir conjointement les parties inférieures (11) respectives de boîtier, toutes les parties inférieures (11) de boîtier étant accessibles conjointement.

2. Système selon la revendication 1, le premier dispositif (10) de distribution et le deuxième dispositif (10) de distribution s'alignant l'un par rapport à l'autre dans la direction horizontale et dans la direction verticale via l'entité (17, 18) d'alignement et de liaison associée aux parois latérales se jouxtant directement du premier dispositif (10) de distribution et du deuxième dispositif (10) de distribution.

3. Système selon la revendication 1, l'entité (17, 18) d'alignement et de liaison étant formée exclusivement sur deux parois latérales mutuellement opposées de la partie inférieure (11) de boîtier considérée.

4. Système selon la revendication 1, l'entité (17, 18) d'alignement et de liaison étant formée sur quatre parois latérales, dont deux sont mutuellement opposées dans chaque cas, de la partie inférieure (11) de boîtier considérée.

5. Système selon la revendication 1, les entités (17, 18) d'alignement et de liaison de parois latérales se jouxtant directement du premier dispositif (10) de distribution et du deuxième dispositif (10) de distribution s'enclenchant l'une dans l'autre avec complémentarité de forme.

6. Système selon la revendication 1, les entités d'alignement et de liaison (17. 18) de parois latérales se jouxtant directement du premier dispositif (10) de distribution et du deuxième dispositif (10) de distribution étant profilées de telle manière qu'elles puissent être dissociées et enclenchées exclusivement dans une direction qui s'étend perpendiculairement aux parois arrière (17) des parties inférieures (11) de boîtier du premier dispositif de distribution et du deuxième dispositif de distribution.

7. Système selon la revendication 1, l'entité (17, 18) d'alignement et de liaison comportant
des découpes (17) formées sur au moins une première paroi latérale de la partie inférieure de boîtier de chaque dispositif parmi le premier dispositif de distribution et le deuxième dispositif de distribution, et
des protubérances (18) sur au moins une deuxième paroi latérale de la partie inférieure de boîtier de chaque dispositif parmi le premier dispositif de distribution et le deuxième dispositif de distribution, et la deuxième paroi latérale s'étendant parallèlement à la première paroi latérale considérée.

8. Système selon la revendication 7, **caractérisé en ce que**, lorsque le premier dispositif (10) de distribution et le deuxième dispositif (10) de distribution se jouxtent directement l'un l'autre par une première paroi latérale et une deuxième paroi latérale, les entités d'alignement et de liaison associées aux parois latérales respectives s'enclenchent l'une dans l'autre avec complémentarité de forme.

9. Système selon la revendication 7, l'entité (17, 18) d'alignement et de liaison sur la partie inférieure (11) de boîtier de chaque dispositif parmi le premier dispositif (10) de distribution et le deuxième dispositif (10) de distribution comportant des découpes (17) sur deux premières parois latérales qui s'étendent perpendiculairement l'une à l'autre, et l'entité (17, 18) d'alignement et de liaison sur la partie inférieure (11) de boîtier de chaque dispositif parmi le premier dispositif de distribution et le deuxième dispositif de distribution comportant des protubérances (18) sur deux deuxièmes parois latérales qui s'étendent perpendiculairement l'une à l'autre.

10. Système selon la revendication 7, les découpes (17) et les protubérances (18) présentant au moins un contour parmi un contour trapézoïdal, en T et en queue d'aronde.

11. Système selon la revendication 1, comportant en outre d'autres dispositifs (10) de distribution, une partie supérieure commune de boîtier, de type couvercle, étant associée aux parties inférieures (11) de boîtier du premier dispositif (10) de distribution et du deuxième dispositif (10) de distribution et des autres dispositifs (10) de distribution afin de fermer ou de recouvrir conjointement toutes les parties inférieures de boîtier.
